# EUROPÄISCHE PATENTSCHRIFT

(11) **EP 2 681 014 B1**
(45) Veröffentlichungstag und Bekanntmachung des Hinweises auf die Patenterteilung: **14.10.2015**
(21) Anmeldenummer: 12717590.9
(22) Anmeldetag: 02.03.2012
(51) Int. Cl.: B25F 5/02, B27B 17/02

(54) **TRAGBARE WERKZEUGMASCHINE**
PORTABLE POWER TOOL
MACHINE-OUTIL PORTATIVE

(30) Priorität: 03.03.2011 DE 102011005041
(43) Veröffentlichungstag der Anmeldung: 08.01.2014
(73) Patentinhaber: Robert Bosch GmbH, 70469 Stuttgart (DE)
(72) Erfinder: FUCHS, Rudolf, 73765 Neuhausen (DE)
(86) Internationale Anmeldenummer: PCT/EP2012/000919
(87) Internationale Veröffentlichungsnummer: WO 2012/116830

(56) Entgegenhaltungen:
- DE-U1- 20 120 984
- US-A- 4 382 334
- US-A- 4 649 644
- US-A- 5 413 158
- US-A- 6 021 826

## Beschreibung

### Stand der Technik

Es sind bereits tragbare Werkzeugmaschinen bekannt, die eine Kopplungsvorrichtung aufweisen, welche mit einer Werkzeugmaschinentrennvorrichtung, die einen Schneidstrang und eine Führungseinheit zur Führung des Schneidstrangs aufweist, koppelbar ist.

### Offenbarung der Erfindung

Die Erfindung geht aus von einer tragbaren Werkzeugmaschine gemäß dem Oberbegriff des Patentanspruchs 1 mit zumindest einer Kopplungsvorrichtung, die mit einer Werkzeugmaschinentrennvorrichtung, die zumindest einen Schneidstrang und zumindest eine Führungseinheit zur Führung des Schneidstrangs aufweist, koppelbar ist.

Eine derartige Werkzeugmaschine geht beispielsweise aus der US 4 382 334 A herror.

Es wird vorgeschlagen, dass die tragbare Werkzeugmaschine zumindest eine Verstauungsvorrichtung umfasst, die dazu vorgesehen ist, die Werkzeugmaschinentrennvorrichtung zumindest in einem mit der Kopplungsvorrichtung gekoppelten Zustand zu verstauen. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Unter einer "Kopp)ungsvorrichtung" soll hier insbesondere eine Vorrichtung verstanden werden, die dazu vorgesehen ist, die Werkzeugmaschinentrennvorrichtung mittels einer formschlüssigen und/oder kraftschlüssigen Verbindung zur Bearbeitung eines Werkstücks mit der tragbaren Werkzeugmaschine wirkungsmäßig zu verbinden. Insbesondere können in einem mit der Werkzeugmaschinentrennvorrichtung gekoppelten Zustand der Kopplungsvorrichtung in einem Betriebszustand der tragbaren Werkzeugmaschine Kräfte und/oder Drehmomente von einer Antriebseinheit der tragbaren Werkzeugmaschine zum Antrieb des Schneidstrangs an die Werkzeugmaschinentrennvorrichtung übertragen werden. Somit ist die Kopplungsvorrichtung vorzugsweise als Werkzeugaufnahme ausgebildet. Der Ausdruck "dazu vorgesehen" soll hier insbesondere speziell ausgelegt und/oder speziell ausgestattet definieren. Der Begriff "Antriebseinheit" soll hier insbesondere eine Einheit definieren, die dazu vorgesehen ist, Kräfte und/oder Drehmomente zu einem Antrieb des Schneidstrangs zu erzeugen. Bevorzugt wird zur Erzeugung von Kräften und/oder Drehmomenten mittels der Antriebseinheit thermische Energie, chemische Energie und/oder elektrische Energie in Bewegungsenergie umgewandelt. Insbesondere ist die Antriebseinheit direkt und/oder indirekt mit dem Schneidstrang koppelbar ausgebildet. Besonders bevorzugt umfasst die Antriebseinheit zumindest einen Rotor, der zumindest eine Ankerwelle aufweist, und zumindest einen Stator. Vorzugsweise ist die Antriebseinheit als Elektromotoreinheit ausgebildet. Es ist jedoch auch denkbar, dass die Antriebseinheit eine andere, einem Fachmann als sinnvoll erscheinende Ausgestaltung aufweist.

Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders bevorzugt wird der Schneidstrang in zumindest einem Betriebszustand umlaufend bewegt, insbesondere entlang eines Umfangs der Führungseinheit. Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt. Vorzugsweise ist die Führungseinheit als Schwert ausgebildet. Der Begriff "Schwert" soll hier insbesondere eine geometrische Form definieren, die, in der Schneidebene betrachtet, eine in sich geschlossene Außenkontur aufweist, die zumindest zwei zueinander parallel verlaufende Geraden und zumindest zwei jeweils sich zugewandte Enden der Geraden miteinander verbindende Verbindungsabschnitte, insbesondere Kreisbögen, umfasst. Somit weist die Führungseinheit eine geometrische Form auf, die sich, in der Schneidebene betrachtet, aus einem Rechteck und zumindest zwei an sich gegenüberliegenden Seiten des Rechtecks angeordneten Kreissektoren zusammensetzt.

Der Begriff "Schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt.

Der Schneidstrang und die Führungseinheit bilden vorzugsweise zusammen ein geschlossenes System. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind. Unter einer "Verstauungsvorrichtung" soll hier insbesondere eine Vorrichtung verstanden werden, die dazu vorgesehen ist, die Werkzeugmaschinentrennvorrichtung in einem mit der Kopplungsvorrichtung gekoppelten Zustand zu verstauen, wobei die Werkzeugmaschinentrennvorrichtung von Bauteilen der Verstauungsvorrichtung und/oder eines Werkzeugmaschinengehäuses der tragbaren Werkzeugmaschine überdeckt wird. Der Begriff "überdeckt" soll hier insbesondere eine Anordnung der Werkzeugmaschinentrennvorrichtung in einem verstauten Zustand der Werkzeugmaschinentrennvorrichtung relativ zu Bauteilen der Verstauungsvorrichtung und/oder des Werkzeugmaschinengehäuses definieren, wobei eine Gesamterstreckung der Werkzeugmaschinentrennvorrichtung entlang zumindest einer in der Schneidebene verlaufenden Richtung kleiner ist als eine Erstreckung von Bauteilen der Verstauungsvorrichtung und/oder des Werkzeugmaschinengehäuses entlang der selben Richtung. Insbesondere wird die Werkzeugmaschinentrennvorrichtung in einem verstauten Zustand, bezogen auf eine in der Schneidebene betrachetete Gesamtfläche der Werkzeugmaschinentrennvorrichtung mehr als 20 %, bevorzugt mehr als 30 % und besonders bevorzugt mehr als 50 %von Bauteilen der Verstauungsvorrichtung und/oder des Werkzeugmaschinerigehäuses überdeckt. Bevorzugt kann ein Kontakt eines Bedieners mit Schneidelementen des Schneidstrangs in einem verstauten Zustand der Werkzeugmaschinentrennvorrichtung weitestgehend vermieden werden. Die Schneidelemente des Schneidstrangs sind vorzugsweise in einem verstauten Zustand der Werkzeugmaschinentrennvorrichtung zumindest in einem Teilbereich der Werkzeugmaschinentrennvorrichtung zumindest im Wesentlichen unberührbar für einen Bediener angeordnet. Besonders bevorzugt wird ein Betrieb, insbeosndere eine umlaufende Bewegung des Schneidstrangs in der Führungseinheit, in einem verstauten Zustand der Werkzeugmaschinentrennvorrichtung unterbunden. Eine Bearbeitungsmöglichkeit eines Werkstücks mittels der Werkzeugmaschinentrennvorichtung wird in einem verstauten Zustand der Werkzeugmaschinentrennvorrichtung bevorzugt verhindert. Mittels der erfindungsgemäßen Ausgestaltung kann vorteilhaft eine hohe Sicherheit gegen Verletzungen eines Bedieners in einem verstauten Zustand der Werkzeugmaschinentrennvorrichtung in der Verstauungsvorrichtung erreicht werden. Ferner kann vorteilhaft eine kompakte tragbare Werkzeugmaschine erreicht werden.

Des Weiteren wird vorgeschlagen, dass die tragbare Werkzeugmaschine ein Werkzeugmaschinengehäuse umfasst, das zumindest eine der Verstauungsvorrichtung zugewandte Seitenwand aufweist, die zusammen mit einem Werkzeugabdeckungselement der Verstauungsvorrichtung eine Aufnahmeaussparung der Verstauungsvorrichtung begrenzen, in der die Werkzeugmaschinentrennvorrichtung verstaubar ist. Bevorzugt ist die Werkzeugmaschinentrennvorrichtung in einem in die Aufnahmeaussparung eingeschwenkten Zustand zumindest in einem Teilbereich, entlang einer zumindest im Wesentlichen senkrecht zur Schneidebene des Schneidstrangs verlaufenden Richtung betrachtet, zwischen dem Werkzeugmaschinengehäuse und dem Werkzeugabdeckungselement angeordnet. Besonders bevorzugt wird die Werkzeugmaschinentrennvorrichtung in einem in die Aufnahmeaussparung eingeschwenkten Zustand somit, entlang der zumindest im Wesentlichen senkrecht zur Schneidebene verlaufenden Richtung betrachtet, von einer Seite von dem Werkzeugmaschinengehäuse und von einer weiteren Seite von dem Werkzeugabdeckungselement überdeckt. Vorzugsweise wird die Werkzeugmaschinentrennvorrichtung in einem in die Aufnahmeaussparung eingeschwenkten Zustand von zumindest drei Seiten von dem Werkzeugmaschinengehäuse und/oder dem Werkzeugabdeckungselement überdeckt. Es kann vorteilhaft eine sichere Verstauung der Werkzeugmaschinentrennvorrichtung erreicht werden.

Vorteilhafterweise ist das Werkzeugabdeckungselement zumindest teilweise einstückig mit dem Werkzeugmaschinengehäuse ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es kann vorteilhaft ein Montageaufwand bei einer Montage der tragbaren Werkzeugmaschine erreicht werden.

Ferner wird vorgeschlagen, dass die Kopplungsvorrichtung zumindest in einem mit der Werkzeugmaschinentrennvorrichtung gekoppelten Zustand relativ zum Werkzeugmaschinengehäuse beweglich gelagert ist. Der Ausdruck "beweglich gelagert" soll hier eine Lagerung der Kopplungsvorrichtung an der tragbaren Werkzeugmaschine zumindest in einem mit der Werkzeugmaschinentrennvorrichtung gekoppelten Zustand definieren, wobei die Kopplungsvorrichtung, insbesondere entkoppelt von einer elastischen Verformung der Kopplungsvorrichtung, eine Bewegungsmöglichkeit um zumindest eine Achse um einen Winkel größer als 10°, bevorzugt größer als 45° und besonders bevorzugt größer als 60° aufweist. Besonders bevorzugt weist die Kopplungsvorrichtung eine Bewegungsmöglichkeit bzw. um eine Achse und entlang zumindest einer Strecke um eine Achse auf, die unabhängig von einer reinen Schließbewegung der Kopplungsvorrichtung zur wirkungsmäßigen Verbindung der Werkzeugmaschinentrennvorrichtung mit der tragbaren Werkzeugmaschine und/oder einer Öffnungsbewegung der Kopplungsvorrichtung zu einem Lösen der wirkungsmäßigen Verbindung der Werkzeugmaschinentrennvorrichtung mit der tragbaren Werkzeugmaschine ist. Mittels der erfindungsgemäßen Ausgestaltung kann die Kopplungvorrichtung vorteilhaft beispielsweise rotatorisch oder rotatorisch und translatorisch in eine für eine Bearbeitung eines Werkstücks geeignete Position bewegt werden. Somit kann vorteilhaft eine hohe Flexibilität bei einer Bearbeitung eines Werkstücks erreicht werden.

Die Kopplungsvorrichtung ist zumindest relativ zum Werkzeugmaschinengehäuse schwenkbar gelagert. Bevorzugt ist die Werkzeugmaschinentrennvorrichtung in einem mit der Kopplungsvorrichtung gekoppelten Zustand mittels der Kopplungsvorrichtung um eine zumindest im Wesentlichen senkrecht zur Schneidebene des Schneidstrangs verlaufende Schwenkachse in die Aufnahmeaussparung der Verstauungsvorrichtung einschwenkbar. Es ist jedoch auch denkbar, dass die Kopplungsvorrichtung alternativ oder zusätzlich um eine andere, einem Fachmann als sinnvoll erscheinende Schwenkachse relativ zum Werkzeugmaschinengehäuse schwenkbar gelagert ist. Es kann vorteilhaft eine Taschenmesserprinzip zur Verstauung der Werkzeugmaschinentrennvorrichtung bei der tragbaren Werkzeugmaschine erreicht werden. Somit können die Schneidelemente des Schneidstrangs der Werkzeugmaschinentrennvorrichtung vorteilhaft in einem eingeschwenkten Zustand der Werkzeugmaschinentrennvorrichtung zumindest teilweise von Bauteilen der Verstauungsvorrichtung und/oder des Werkzeugmaschinengehäuses überdeckt werden.

Zudem wird vorgeschlagen, dass die tragbare Werkzeugmaschine zumindest eine Antriebseinheit und zumindest eine Steuer- und/oder Regeleinheit, die dazu vorgesehen ist, die Antriebseinheit in Abhängigkeit einer Winkelstellung der Kopplungsvorrichtung relativ zum Werkzeugmaschinengehäuse der tragbaren Werkzeugmaschine zu steuern- und/oder zu regeln. Unter einer "Steuer- und/oder Regeleinheit" soll insbesondere eine Einheit mit zumindest einem Steuergerät verstanden werden. Unter einem "Steuergerät" soll insbesondere eine Einheit mit zumindest einer Prozessoreinheit und mit zumindest einer Speichereinheit sowie mit einem in der Speichereinheit gespeicherten Betriebsprogramm verstanden werden. Besonders bevorzugt wird eine Übertragung eines Antriebsmoments von der Antriebseinheit an den Schneidstrang unterbrochen, sobald die Kopplungsvorrichtung um die Schwenkachse geschwenkt wird. Vorzugsweise wird eine Energieversorgung der Antriebseinheit mittels der Steuer- und/oder Regeleinheit bei der in einem eingeschwenkten Zustand befindlichen Werkzeugmaschinentrennvorrichtung unterbunden, um eine Übertragung eines Antriebsmoments der Antriebseinheit und/oder der Getriebeeinheit auf den Schneidstrang zu vermeiden. Es ist jedoch auch denkbar, dass die Übertragung eines Antriebsmoments von der Antriebseinheit an den Schneidstrang mittels einer mechanischen Einheit unterbrochen wird. eine Es kann vorteilhaft ein hoher Bedienkomfort für einen Bediener erreicht werden.

Vorteilhafterweise weist die tragbare Werkzeugmaschine zumindest eine Arretiereinheit auf, die dazu vorgesehen ist, die Kopplungsvorrichtung zumindest in einem mit der Werkzeugmaschinentrennvorrichtung gekoppelten Zustand in einer Winkelstellung relativ zum Werkzeugmaschinengehäuse zu fixieren. Somit kann die Kopplungsvorrichtung vorteilhaft in einer von einem Bediener gewünschten Position relativ zum Werkzeugmaschinengehäuse fixiert werden. Ferner kann vorteilhaft eine Bearbeitung eines Werkstücks in verschiedenen Winkelstellungen der Kopplungsvorrichtung relativ zum Werkzeugmaschinengehäuse realisiert werden.

In einem Ausführungsbeispiel wird eine Werkzeugmaschinentrennvorrichtung für eine erfindungsgemäße tragbare Werkzeugmaschine, mit zumindest einer Führungseinheit und mit zumindest einem Schneidstrang, die zusammen ein geschlossenes System bilden gezeigt. Es kann vorteilhaft ein vielseitig einsetzbares Werkzeug zur Bearbeitung von Werkstücken erreicht werden.

Des Weiteren geht die Erfindung aus von einem Werkzeugmaschinensystem mit zumindest einer erfindungsgemäßen tragbaren Werkzeugmaschine und mit zumindest einer Werkzeugmaschinentrennvorrichtung. Besonders bevorzugt ist die Werkzeugmaschinentrennvorrichtung in einem mit der Kopplungsvorrichtung gekoppelten Zustand mittels der Kopplungsvorrichtung um eine zumindest im Wesentlichen senkrecht zu einer Schneidebene des Schneidstrangs verlaufende Schwenkachse in die Aufnahmeaussparung der Verstauungsvorrichtung einschwenkbar. Es kann konstruktiv einfach eine Verstauungsvorrichtung zu einer sicheren Verstauung der Werkzeugmaschinentrennvorrichtung erreicht werden.

Die Werkzeugmaschinentrennvorrichtung und/oder die erfindungsgemäße Werkzeugmaschine sollen hierbei nicht auf die oben beschriebene Anwendung und Ausführungsform beschränkt sein. Insbesondere kann die Werkzeugmaschinentrennvorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Es zeigen:
- Fig. 1: eine erfindungsgemäße tragbare Werkzeugmaschine mit einer Werkzeugmaschinentrennvorrichtung in einer schematischen Darstellung,
- Fig. 2: die erfindungsgemäße Werkzeugmaschine während einem Schwenkvorgang der Werkzeugmaschinentrennvorrichtung in eine Aufnahmeaussparung einer Verstauungsvorrichtung der erfindungsgemäßen Werkzeugmaschine in einer schematischen Darstellung,
- Fig. 3: die mit einer Kopplungsvorrichtung gekoppelte Werkzeugmaschinentrennvorrichtung in einer relativen Winkelstellung zu einem Werkzeugmaschinengehäuse der erfindungsgemäßen Werkzeugmaschine in einer schematischen Darstellung,
- Fig. 4: eine Detailansicht einer Getriebeeinheit der erfindungsgemäßen Werkzeugmaschine in einer schematischen Darstellung,
- Fig. 5: eine Detailansicht der Werkzeugmaschinentrennvorrichtung in einer schematischen Darstellung,
- Fig. 6: eine Schnittansicht entlang der Linie VI-VI aus Figur 5 der Werkzeugmaschinentrennvorrichtung in einer schematischen Darstellung,
- Fig. 7: eine Detailansicht von Schneidenträgerelementen eines Schneidstrangs der Werkzeugmaschinentrennvorrichtung in einer schematischen Darstellung,
- Fig. 8: eine weitere Detailansicht eines der Schneidenträgerelemente des Schneidstrangs der Werkzeugmaschinentrennvorrichtung in einer schematischen Darstellung und
- Fig. 9: eine Detailansicht einer Anordnung der Schneidenträgerelemente in einer Führungseinheit der Werkzeugmaschinentrennvorrichtung in einer schematischen Darstellung.

### Beschreibung des Ausführungsbeispiels

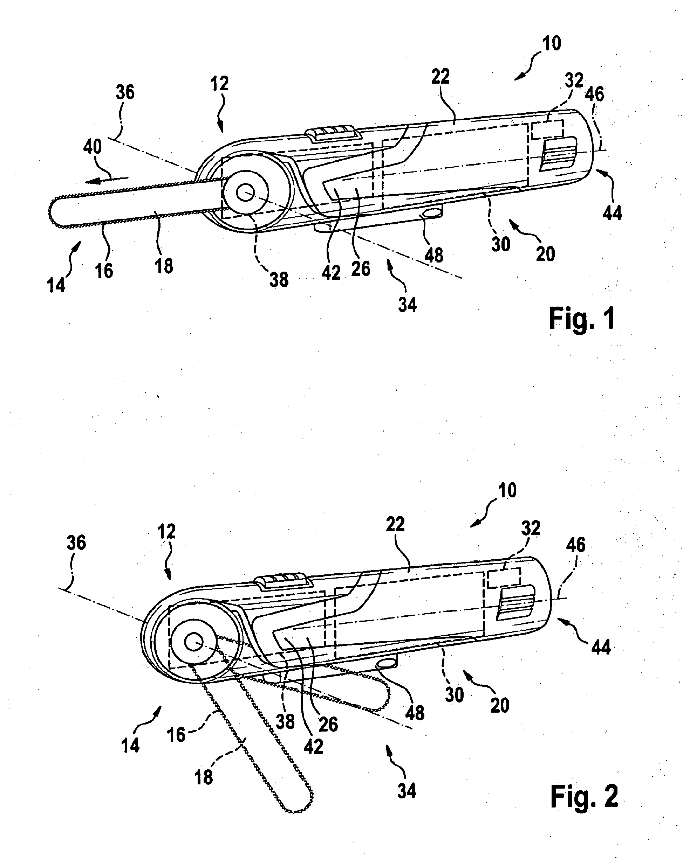

Figur 1 zeigt eine tragbare Werkzeugmaschine 10 mit einer Werkzeugmaschinentrennvorrichtung 14, die zusammen ein Werkzeugmaschinensystem bilden. Die tragbare Werkzeugmaschine 10 weist eine Kopplungsvorrichtung 12 zur formschlüssigen und/oder kraftschlüssigen Kopplung mit der Werkzeugmaschinentrennvorrichtung 14 auf. Die Kopplungsvorrichtung 12 kann hierbei als Bajonettverschluss und/oder als eine andere, einem Fachmann als sinnvoll erscheinende Kopplungsvorrichtung ausgebildet sein. Ferner ist die Kopplungsvorrichtung 12 dazu vorgesehen, die Werkzeugmaschinentrennvorrichtung 14 wirkungsmäßig mit der tragbaren Werkzeugmaschine 10 zu verbinden. Somit ist die Kopplungsvorrichtung 12 zumindest in einem Betriebszustand dazu vorgesehen, mit der Werkzeugmaschinentrennvorrichtung 14, die zumindest einen Schneidstrang 16 und eine Führungseinheit 18 zur Führung des Schneidstrangs 16 umfasst, gekoppelt zu werden. Die tragbare Werkzeugmaschine 10 weist ein Werkzeugmaschinengehäuse 22 auf, das eine Antriebseinheit 30 und eine Getriebeeinheit 34 der tragbaren Werkzeugmaschine 10 umschließt. Die Antriebseinheit 30 und die Getriebeeinheit 38 sind zur Erzeugung eines auf die Werkzeugmaschinentrennvorrichtung 14 übertragbaren Antriebsmoments auf eine, einem Fachmann bereits bekannte Art und Weise wirkungsmäßig miteinander verbunden. Hierbei sind die Antriebseinheit 30 und/oder die Getriebeeinheit 38 dazu vorgesehen, in einem montierten Zustand mittels der Kopplungsvorrichtung 12 mit dem Schneidstrang 16 gekoppelt zu werden. Die Getriebeeinheit 38 der tragbaren Werkzeugmaschine 10 ist als Winkelgetriebe ausgebildet. Die Antriebseinheit 30 ist als Elektromotoreinheit ausgebildet. Es ist jedoch auch denkbar, dass die Antriebseinheit 30 und/oder die Getriebeeinheit 38 eine andere, einem Fachmann als sinnvoll erscheinende Ausgestaltung aufweisen. Die Antriebseinheit 30 ist dazu vorgesehen, den Schneidstrang 16 der Werkzeugmaschinentrennvorrichtung 14 in zumindest einem Betriebszustand mit einer Schnittgeschwindigkeit kleiner als 6 m/s anzutreiben. Hierbei weist die tragbare Werkzeugmaschine 10 zumindest einen Betriebsmodus auf, in dem ein Antrieb des Schneidstrangs 16 in der Führungseinheit 18 der Werkzeugmaschinentrennvorrichtung 14 entlang einer Schneidrichtung 40 des Schneidstrangs 1.6 mit einer Schnittgeschwindigkeit kleiner als 6 m/s ermöglicht wird.

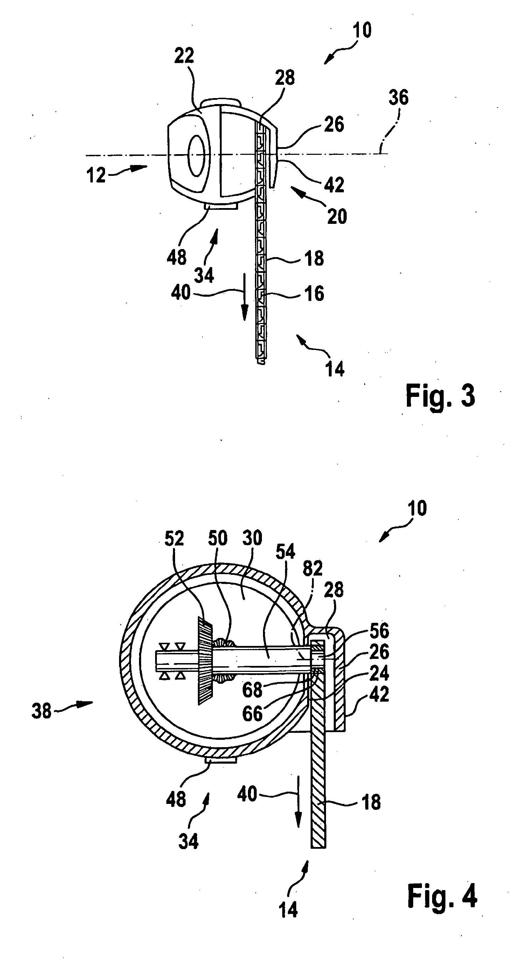

Des Weiteren weist die tragbare Werkzeugmaschine 10 eine Verstauungsvorrichtung 20 auf, die dazu vorgesehen ist, die Werkzeugmaschinentrennvorrichtung 14 in einem mit der Kopplungsvorrichtung 12 gekoppelten Zustand zu verstauen. Die Werkzeugmaschinentrennvorrichtung 14 ist hierbei formschlüssig und/oder kraftschlüssig mit der Kopplungsvorrichtung 12 verbunden. Das Werkzeugmaschinengehäuse 22 der tragbaren Werkzeugmaschine 10 weist zu einer Verstauung der Werkzeugmaschinentrennvorrichtung 14 in einem mit der Kopplungsvorrichtung 12 gekoppelten Zustand eine der Verstauungsvorrichtung 20 zugewandte Seitenwand 24 auf (Figuren 3 und 4), die zusammen mit einem Werkzeugabdeckungselement 26 der Verstauungsvorrichtung 20 eine Aufnahmeaussparung 28 der Verstauungsvorrichtung 20 begrenzen, in der die Werkzeugmaschinentrennvorrichtung 14 verstaubar ist. Die Aufnahmeaussparung 28 ist zur Aufnahme der Werkzeugmaschinentrennvorrichtung 14 in einem eingeschwenkten Zustand der Werkzeugmaschinentrennvorrichtung 14 vorgesehen. Die Werkzeugmaschinentrennvorrichtung 14 ist in einem eingeschwenkten Zustand mit einem Teilbereich in der Aufnahmeaussparung 28 angeordnet (Figur 2).

Hierbei ist die Werkzeugmaschinentrennvorrichtung 14 in einem in die Aufnahmeaussparung 28 angeordneten Zustand in einem Teilbereich, entlang einer zumindest im Wesentlichen senkrecht zu einer Schneidebene des Schneidstrangs 16 verlaufenden Richtung betrachtet, zwischen der Seitenwand 24 des Werkzeugmaschinengehäuses 22 und dem Werkzeugabdeckungselement 26 angeordnet. Das Werkzeugabdeckungselement 26 ist, in einer Ebene senkrecht zur Schneidebene der mit der Kopplungsvorrichtung 12 gekoppelten Werkzeugmaschinentrennvorrichtung 14 betrachtet, L-förmig an das Werkzeugmaschinengehäuse 22 angeformt (Figuren 3 und 4). Es ist jedoch auch denkbar, dass das Werkzeugabdeckungselement 26 in einer anderen, einem Fachmann als sinnvoll erscheinenden Ausgestaltung an das Werkzeugmaschinengehäuse 22 angeformt ist. Ferner ist es denkbar, dass das Werkzeugabdeckungselement 26 mittels als ein von dem Werkzeugmaschinengehäuse 22 getrennten Bauteil ausgebildet ist, das mittels einer formschlüssigen und/oder kraftschlüssigen Verbindung mit dem Werkzeugmaschinengehäuse 22 verbunden ist. Eine Außenwand 42 des Werkzeugabdeckungselement 26, die auf einer dem Werkzeugmaschinengehäuse 22 abgewandten Seite des Werkzeugabdeckungselements 26 angeordnet ist, verläuft an einem der Kopplungsvorrichtung 12 abgewandten Ende 44 des Werkzeugmaschinengehäuses 22 ausgehend von der dem Werkzeugmaschinengehäuse 22 abgewandten Seite des Werkzeugabdeckungselements 26 in Richtung des Werkzeugmaschinengehäuses 22 und ist stoffschlüssig mit dem Werkzeugmaschinengehäuse 22 verbunden. Es ist jedoch auch denkbar, dass das Werkzeugabdeckungselement 26 der dem Werkzeugmaschinengehäuse 22 abgewandten Seite des Werkzeugabdeckungselements 26 lediglich parallel zur Seitenwand 24 des Werkzeugmaschinengehäuses 22 verläuft, die dem Werkzeugabdeckungselement 26 zugewandt ist.

Zur Verstauung der Werkzeugmaschinentrennvorrichtung 14 ist die Kopplungsvorrichtung 12 in einem mit der Werkzeugmaschinentrennvorrichtung 14 gekoppelten Zustand relativ zum Werkzeugmaschinengehäuse 22 beweglich gelagert (Figur 2). Die Kopplungsvorrichtung 12 weist eine Bewegungsmöglichkeit um eine Achse bzw. Um eine Achse und entlang einer Strecke auf die unabhängig von einer reinen Schließbewegung der Kopplungsvorrichtung 12 zur wirkungsmäßigen Verbindung der Werkzeugmaschinentrennvorrichtung 14 mit der tragbaren Werkzeugmaschine 10 und/oder unabhängig von einer reinen Öffnungsbewegung der Kopplungsvorrichtung 12 zu einem Lösen der wirkungsmäßigen Verbindung der Werkzeugmaschinentrennvorrichtung 14 mit der tragbaren Werkzeugmaschine 10 ist. Hierbei kann die Kopplungsvorrichtung 12 manuell infolge einer Krafteinwirkung eines Bedieners auf die Kopplungsvorrichtung 12 in eine vom Bediener gewünschte Position und/oder zur Verstauung der Werkzeugmaschinentrennvorrichtung 14 in der Aufnahmeaussparung 28 der Verstauungsvorrichtung 20 bewegt werden. Es ist jedoch auch denkbar, dass die tragbare Werkzeugmaschine 10 eine Kopplungsvorrichtungsantriebseinheit (hier nicht näher dargestellt) umfasst, die dazu vorgesehen ist, die Kopplungsvorrichtung 12 zu einer Ausführung einer von der Öffnungsbewegung und/oder der Schließbewegungunabhängigen Bewegung anzutreiben. Die Kopplungsvorrichtungsantriebseinheit kann beispielsweise als Elektromotoreinheit ausgebildet sein oder als eine andere, einem Fachmann als sinnvoll erscheinende Kopplungsvorrichtungsantriebseinheit.

Die Kopplungsvorrichtung 12 ist relativ zum Werkzeugmaschinengehäuse 22 schwenkbar gelagert. Hierbei ist die Kopplungsvorrichtung 12 um eine im Wesentlichen senkrecht zu einer Antriebseinheitslängsachse 46 der Antriebseinheit 30 verlaufende Schwenkachse 36 schwenkbar gelagert. Die Kopplungsvorrichtung 12 kann von einem Bediener in eine gewünschte Winkelstellung der Kopplungsvorrichtung 12 relativ zum Werkzeugmaschinengehäuse 22 bewegt werden. Die Winkelstellung der Kopplungsvorrichtung 12 relativ zum Werkzeugmaschinengehäuse 22 liegt hierbei in einem Winkelbereich von 180°, um den die Kopplungsvorrichtung 12 um die Schwenkachse 36 schwenkbar gelagert ist. Die tragbare Werkzeugmaschine 10 umfasst eine Arretiereinheit 34, die dazu vorgesehen ist, die Kopplungsvorrichtung 12 in einem mit der Werkzeugmaschinentrennvorrichtung 14 gekoppelten Zustand und in einem mit der Werkzeugmaschinentrennvorrichtung 14 ungekoppelten Zustand in einer Winkelstellung relativ zum Werkzeugmaschinengehäuse 22 zu fixieren. Die Arretiereinheit 34 ist dazu vorgesehen, die Kopplungsvorrichtung 12 mittels Formschlusselementen (hier nicht näher dargestellt) und/oder Kraftschlusselementen (hier nicht näher dargestellt) der Arretiereinheit 34 in der gewünschten Winkelstellung relativ zum Werkzeugmaschinengehäuse 22 zu fixieren. Zu einer Betätigung der Formschlusselemente und/oder der Kraftschlusselemente weist die Arretiervorrichtung 34 ein Bedienelement 48 auf. Das Bedienelement 48 ist als Bedienhebel ausgebildet. Es ist jedoch auch denkbar, dass das Bedienelement 48 eine andere, einem Fachmann als sinnvoll erscheinende Ausgestaltung aufweist.

Ferner verläuft die Schwenkachse 36 in einem mit der Kopplungsvorrichtung 12 gekoppelten Zustand der Werkzeugmaschinentrennvorrichtung 14 im Wesentlichen senkrecht zur Schneidebene des Schneidstrangs 16. Somit ist die Werkzeugmaschinentrennvorrichtung 14 in einem mit der Kopplungsvorrichtung 12 gekoppelten Zustand mittels der Kopplungsvorrichtung 12 um die im Wesentlichen senkrecht zur Schneidebene des Schneidstrangs 16 verlaufende Schwenkachse 36 in die Aufnahmeaussparung 28 der Verstauungsvorrichtung 20 einschwenkbar (Figur 2). Ein Bediener betätigt das Bedienelement 48 der Arretiereinheit 34 zu einer Aufhebung einer Fixierung der Kopplungsvorrichtung 12 in einer Winkelstellung relativ zum Werkzeugmaschinengehäuse 22. Anschließend kann der Bediener die Kopplungsvorrichtung 12 um die Schwenkachse 36 schwenken um die Werkzeugmaschinentrennvorrichtung 14 zur Verstauung in die Aufnahmeaussparung 28 der Verstauungsvorrichtung 20 einzuschwenken. Zu einer Beibehaltung einer Position der Werkzeugmaschinentrennvorrichtung 14 in der Aufnahmeaussparung 28 betätigt der Bediener das Bedienelement 48 der Arretiereinheit erneut, um die Kopplungsvorrichtung 12 in der Winkelstellung relativ zum Werkzeugmaschinengehäuse 22, die einer in die Aufnahmeaussparung 28 eingeschwenkten Position de Werkzeugmaschinentrennvorrichtung 14 entspricht.

Des Weiteren weist die tragbare Werkzeugmaschine 10 eine Steuer- und/oder Regeleinheit 32 auf, die dazu vorgesehen ist, die Antriebseinheit 30 in Abhängigkeit einer Winkelstellung der Kopplungsvorrichtung 12 relativ zum Werkzeugmaschinengehäuse 22 der tragbaren Werkzeugmaschine 10 zu steuern- und/oder zu regeln. Hierbei wird mittels der Steuer- und/oder Regeleinheit 32 eine Übertragung eines Antriebsmoments von der Antriebseinheit 30 und/oder der Getriebeeinheit 38 an den Schneidstrang 16 unterbrochen, sobald die Kopplungsvorrichtung 12 um die Schwenkachse 36 geschwenkt wird. Die Unterbrechung einer Übertragung eines Antriebsmoments kann hierbei mechanisch, elektrisch und/oder elektronisch erfolgen, wobei die Steuer- und/oder Regeleinheit 32 einen Impuls zur Unterbrechung abgibt. In einem in die Aufnahmeaussparung 28 eingeschwenkten Zustand der Werkzeugmaschinentrennvorrichtung 14 wird die Antriebseinheit 30 mittels der Steuer- und/oder Regeleinheit 32 von einer Energieversorgung mechanisch, elektrisch und/oder elektronisch getrennt. Die Steuerund/oder Regeleinheit 32 ist ferner dazu vorgesehen, eine der Antriebseinheit 30 abhängig von einer in dem Winkelbereich von 180° relativen Winkelstellung der Kopplungsvorrichtung 12 zum Werkzeugmaschinengehäuse 22 zu ändern. Die Steuer- und/oder Regeleinheit 32 ist hierbei dazu vorgesehen, zur Änderung der Antriebsrichtung in eine Motorsteuerung zur Steuerung der Antriebseinheit 30 einzugreifen.

Zum Antrieb des Schneidstrangs 16 bzw. zur Übertragung von Kräften und/oder Drehmomenten von der Antriebseinheit 30 und/oder der Getriebeeinheit 38 an den Schneidstrang 16 weist die Antriebseinheit 30 eine Ankerwelle (hier nicht näher dargestellt) auf, die drehfest mit einem Ritzel 50 (Figur 4) der Antriebseinheit 30 und/oder der Getriebeeinheit 38 verbunden ist. In einem Betriebszustand kämmt das Ritzel 50 mit einem Zahnrad 52 der Getriebeeinheit 52. Das Zahnrad 52 ist hierbei als Tellerrad ausgebildet. Es ist jedoch auch denkbar, dass das Zahnrad 52 eine andere, einem Fachmann als sinnvoll erscheinende Ausgestaltung aufweist. Das Zahnrad 52 ist drehfest mit einer Abtriebswelle 54 der Getriebeeinheit 38 verbunden. Die Abtriebswelle 54 weist an einer dem Schneidstrang 16 in einem montierten Zustand zugewandten Seite ein verzahntes Ende 56 auf, das dazu vorgesehen ist, zum Antrieb des Schneidstrangs 16 direkt und/oder indirekt mit dem Schneidstrang 16 gekoppelt zu werden. Das verzahnte Ende 56 ist als Sechskant ausgebildet.

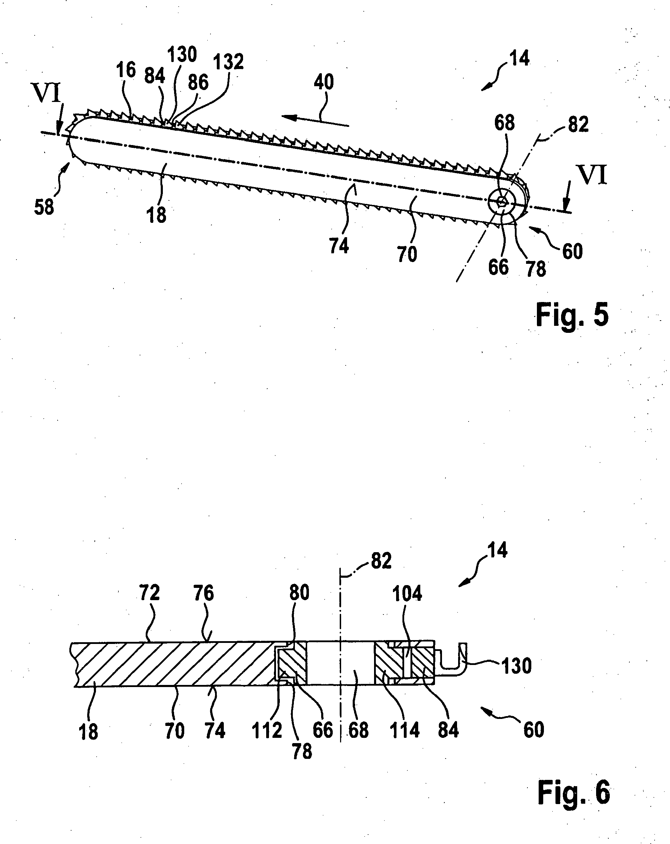

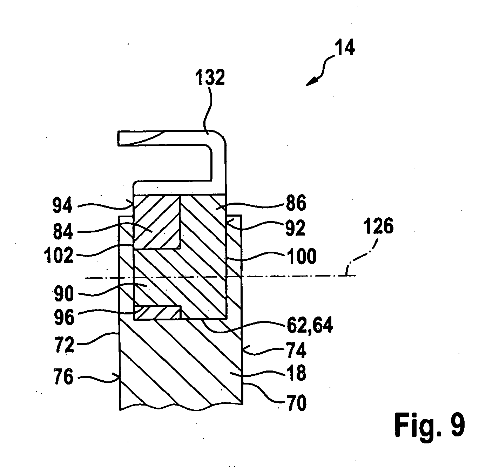

Figur 5 zeigt die Werkzeugmaschinentrennvorrichtung 14 in einem von der Kopplungsvorrichtung 12 der tragbaren Werkzeugmaschine 10 entkoppelten Zustand. Die Werkzeugmaschinentrennvorrichtung 14 weist den Schneidstrang 16 und die Führungseinheit 18 auf, die zusammen ein geschlossenes System bilden. Die Führungseinheit 18 ist als Schwert ausgebildet. Ferner weist die Führungseinheit 18, in der Schneidebene des Schneidstrangs 16 betrachtet, zumindest zwei konvex ausgebildete Enden 58, 60 auf. Die konvex ausgebildeten Enden 58, 60 der Führungseinheit 18 sind an zwei sich abgewandten Seiten der Führungseinheit 18 angeordnet. Der Schneidstrang 16 wird mittels der Führungseinheit 18 geführt. Hierzu weist die Führungseinheit 18 zumindest ein Führungselement 62 (Figur 9) auf, mittels dessen der Schneidstrang 16 geführt wird. Das Führungselement 62 ist hierbei als Führungsnut 64 ausgebildet, die sich in der Schneidebene des Schneidstrangs 16 entlang eines gesamten Umfangs der Führungseinheit 18 erstreckt. Hierbei wird der Schneidstrang 16 mittels die Führungsnut 64 begrenzenden Randbereichen der Führungseinheit 18 geführt. Es ist jedoch auch denkbar, dass das Führungselement 62 in einer anderen, einem Fachmann als sinnvoll erscheinenden Art und Weise, wie beispielsweise als rippenartige Anformung an der Führungseinheit 18, die in eine Ausnehmung an dem Schneidstrang 16 eingreift, ausgebildet ist. Der Schneidstrang 16 wird, in einer senkrecht zur Schneidebene verlaufenden Ebene betrachtet, von drei Seiten von den die Führungsnut 64 begrenzenden Randbereichen umgeben (Figur 9). Der Schneidstrang 16 wird während eines Betriebs umlaufend entlang des Umfangs der Führungseinheit 18 in der Führungsnut 64 relativ zur Führungseinheit 18 bewegt.

Des Weiteren weist die Werkzeugmaschinentrennvorrichtung 14 ein mittels der Führungseinheit 18 zumindest teilweise gelagertes Drehmomentübertragungselement 66 zum Antrieb des Schneidstrangs 16 auf. Hierbei weist das Drehmomentübertragungselement 66 eine Kopplungsausnehmung 68 auf, die in einem montierten Zustand mit dem verzahnten Ende 56 der Abtriebswelle 54 gekoppelt ist (Figur 4). Es ist jedoch auch denkbar, dass das Drehmomentübertragungselement 66 in einem gekoppelten Zustand zum Antrieb des Schneidstrangs 16 direkt mit dem Ritzel 50 der Antriebseinheit 30 und/oder dem Zahnrad 52 der Getriebeeinheit 38 gekoppelt ist. Die Kopplungsausnehmung 68 ist konzentrisch im Drehmomentübertragungselement 66 angeordnet. Die Kopplungsausnehmung 68 ist als Innensechskant ausgebildet. Es ist jedoch auch denkbar, dass die Kopplungsausnehmung 68 eine andere, einem Fachmann als sinnvoll erscheinende Ausgestaltung aufweist.

In einem ungekoppelten Zustand des Drehmomentübertragungselements 66 mit dem verzahnten Ende 56 der Abtriebswelle 54 ist das Drehmomentübertragungselement 66 quer zur Schneidrichtung 40 des Schneidstrangs 16 und/oder entlang der Schneidrichtung 40 in der Führungseinheit 18 beweglich angeordnet (Figur 6). Hierbei ist das Drehmomentübertragungselement 66 zumindest teilweise zwischen zwei Außenwänden 70, 72 der Führungseinheit 18 angeordnet. Die Außenwände 70, 72 verlaufen zumindest im Wesentlichen parallel zur Schneidebene des Schneidstrangs 16. Die Führungseinheit 18 weist in Außenflächen 74, 76 der Außenwände 70, 72 jeweils eine Ausnehmung 78, 80 auf, in der das Drehmomentübertragungselement 66 zumindest teilweise angeordnet ist.

Das Drehmomentübertragungselement 66 ist mit einem Teilbereich in den Ausnehmungen 78, 80 der Außenwände 70, 72 angeordnet. Das Drehmomentübertragungselement 66 weist hierbei zumindest in dem in den Ausnehmungen 78, 80 angeordneten Teilbereich eine Erstreckung entlang einer Rotationsachse 82 des Drehmomentübertragungselements 66 auf, die bündig mit einer der Außenflächen 74, 76 und/oder mit beiden Außenflächen 74, 76 der Führungseinheit 18 abschließt. Ferner weist der in den Ausnehmungen 78, 80 der Außenflächen 74, 76 der Führungseinheit 18 angeordnete Teilbereich des Drehmomentübertragungselements 66 eine sich zumindest im Wesentlichen senkrecht zur Rotationsachse 82 des Drehmomentübertragungselements 66 erstreckende Außenabmessung auf, die zumindest 0,1 mm kleiner ist als eine sich zumindest im Wesentlichen senkrecht zur Rotationsachse 82 des Drehmomentübertragungselements 66 erstreckende Innenabmessung der Ausnehmungen 78, 80. Der in den Ausnehmungen 78, 80 angeordnete Teilbereich des Drehmomentübertragungselements 66 ist entlang einer senkrecht zur Rotationsachse 82 verlaufenden Richtung jeweils beabstandet zu einem die jeweilige Ausnehmung 78, 80 begrenzenden Rand der Außenwände 70, 72 angeordnet. Somit weist der in den Ausnehmungen 78, 80 angeordnete Teilbereich des Drehmomentübertragungselements 66 ein Spiel innerhalb der Ausnehmungen 78, 80 auf.

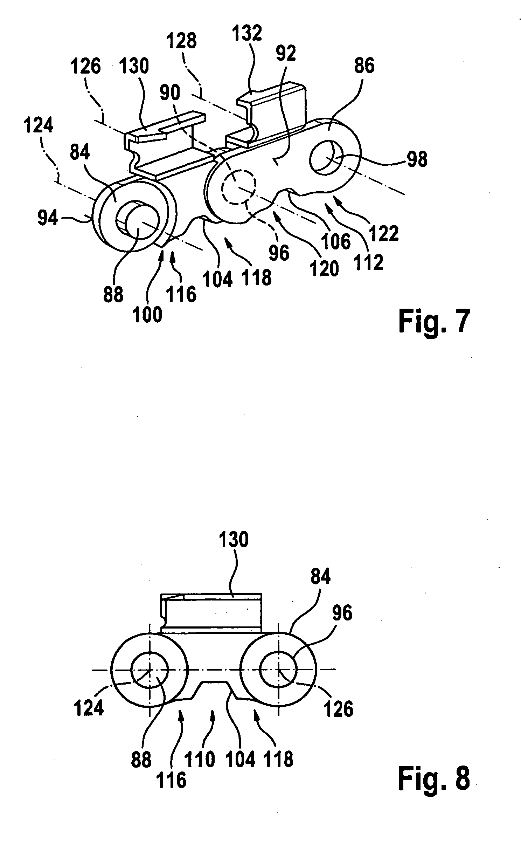

Figur 7 zeigt eine Detailansicht von Schneidenträgerelementen 84, 86 des Schneidstrangs 16 der Werkzeugmaschinentrennvorrichtung 14. Der Schneidstrang 16 umfasst eine Vielzahl miteinander verbundener Schneidenträgerelemente 84, 86, die jeweils mittels eines Verbindungselements 88, 90 des Schneidstrangs 16 miteinander verbunden sind, das zumindest im Wesentlichen bündig mit einer von zwei Außenflächen 92, 94 eines der miteinander verbundenen Schneidenträgerelemente 84, 86 abschließt (vgl. auch Figur 9). Die Verbindungselemente 88, 90 sind bolzenförmig ausgebildet. Die Außenflächen 92, 94 verlaufen in einem in der Führungsnut 64 angeordneten Zustand des Schneidstrangs 16 zumindest im Wesentlichen parallel zur Schneidebene des Schneidstrangs 16. Ein Fachmann wird je nach Anwendungsfall eine für den Schneidstrang 16 geeignete Anzahl an Schneidenträgerelementen 84, 86 auswählen. Die Schneidenträgerelemente 84, 86 sind jeweils einstückig mit einem der Verbindungselemente 88, 90 ausgebildet. Ferner weisen die Schneidenträgerelemente 84, 86 jeweils eine Verbindungsausnehmung 96, 98 zur Aufnahme eines der Verbindungselemente 88, 90 der miteinander verbundenen Schneidenträgerelemente 84, 86 auf. Die Verbindungselemente 88, 90 sind mittels der Führungseinheit 18 geführt (Figur 9). Hierbei sind die Verbindungselemente 88, 90 in einem montierten Zustand des Schneidstrangs 16 in der Führungsnut 64 angeordnet. Die Verbindungselemente 88, 90 können sich, in einer senkrecht zur Schneidebene verlaufenden Ebene betrachtet, an zwei Seitenwänden 100, 102 der Führungsnut 64 abstützen. Die Seitenwände 100, 102 begrenzen die Führungsnut 64 entlang einer senkrecht zur Schneidebene verlaufenden Richtung. Ferner erstrecken sich die Seitenwände 100, 102 der Führungsnut 64, in der Schneidebene betrachtet, ausgehend von der Führungseinheit 18 senkrecht zur Schneidrichtung 40 des Schneidstrangs 16 nach außen.

Die Schneidenträgerelemente 84, 86 des Schneidstrangs 16 weisen jeweils eine Antriebsausnehmung 104, 106 auf, die jeweils in einem montierten Zustand auf einer dem Drehmomentübertragungselement 66 zugewandten Seite 108, 110 des jeweiligen Schneidenträgerelements 84, 86 angeordnet ist. Das Drehmomentübertragungselement 66 greift in zumindest einem Betriebszustand zum Antrieb des Schneidstrangs 16 in die Antriebsausnehmungen 104, 106 ein. Das Drehmomentübertragungselement 66 ist hierbei als Zahnrad ausgebildet. Somit umfasst das Drehmomentübertragungselement 66 Zähne 112, 114, die dazu vorgesehen sind, in zumindest einem Betriebszustand zum Antrieb des Schneidstrangs 16 in die Antriebsausnehmungen 104, 106 der Schneidenträgerelemente 84, 86 einzugreifen. Ferner sind die dem Drehmomentübertragungselement 66 zugewandten Seiten 108, 110 der Schneidenträgerelemente 84, 86 kreisbogenförmig ausgebildet. Die dem Drehmomentübertragungselement 66 in einem montierten Zustand zugewandten Seiten 108, 110 der Schneidenträgerelemente 84, 86 sind jeweils in Teilbereichen 116, 118, 120, 122, zwischen einer Mittelachse 124 des jeweiligen Verbindungselements 86, 88 und einer Mittelachse 126, 128 der jeweiligen Verbindungsausnehmung 96, 98 betrachtet, kreisbogenförmig ausgestaltet. Die kreisbogenförmigen Teilbereiche 116, 118, 120, 122 sind jeweils angrenzend an die Antriebsausnehmungen 104, 106, in die das Drehmomentübertragungselement 66 eingreift; ausgebildet. Hierbei weisen die kreisbogenförmigen Teilbereiche 116, 118, 120, 122 einen Radius auf, der einem Radius eines Verlaufs der Führungsnut 64 an den konvexen Enden 58, 60 entspricht. Die Teilbereiche 116, 118, 120, 122 sind konkav ausgebildet (Figur 8).

Ferner weist der Schneidsträng 16 Schneidelemente 130, 132 auf. Die Schneidelemente 130, 132 sind jeweils einstückig mit einem der Schneidenträgerelemente 84, 86 ausgebildet. Eine Anzahl der Schneidelemente 130, 132 ist abhängig von einer Anzahl an Schneidenträgerelementen 84, 86. Ein Fachmann wird je nach Anzahl an Schneidenträgerelementen 84, 86 eine geeignete Anzahl an Schneidelementen 130, 132 auswählen. Die Schneidelemente 130, 132 sind dazu vorgesehen, ein Abtrennen und/oder ein Abtragen von Werkstoffteilchen eines zu bearbeitenden Werkstücks (hier nicht näher dargestellt) zu ermöglichen. Die Schneidelemente 130, 132 können beispielsweise als Vollmeißel, Halbmeißel oder andere, einem Fachmann als sinnvoll erscheinende Schneidenarten ausgebildet sein, die dazu vorgesehen sind, ein Abtrennen und/oder ein Abtragen von Werkstoffteilchen eines zu bearbeitenden Werkstücks zu ermöglichen. Der Schneidstrang 16 ist endlos ausgebildet. Somit ist der Schneidstrang 16 als Schneidkette ausgebildet. Die Schneidenträgerelemente 84, 86 sind hierbei als Kettenglieder ausgebildet, die mittels der bolzenförmigen Verbindungselemente 88, 90 miteinander verbunden sind. Es ist jedoch auch denkbar, dass der Schneidstrang 16, die Schneidenträgerelemente 84, 86 und/oder die Verbindungselemente 88, 90 in einer anderen, einem Fachmann als sinnvoll erscheinenden Art und Weise ausgestaltet sind.

## Patentansprüche

1. Tragbare Werkzeugmaschine mit zumindest einer Kopplungsvorrichtung (12), die mit einer Werkzeugmaschinentrennvorrichtung (14), die zumindest einen Schneidstrang (16) und zumindest eine Führungseinheit (18) zur Führung des Schneidstrangs (16) aufweist, koppelbar ist, mit zumindest einer Antriebseinheit (30), mit zumindest einer Getriebeeinheit (34), mit zumindest einer Steuer- und/oder Regeleinheit (32), mit einem Werkzeugmaschinengehäuse (22), das die Antriebseinheit (30) und die Getriebeeinheit (34) umschließt, und mit zumindest einer Verstauungsvorrichtung (20), die dazu vorgesehen ist, die Werkzeugmaschinentrennvorrichtung (14) zumindest in einem mit der Kopplungsvorrichtung (12) gekoppelten Zustand zu verstauen, wobei das Werkzeugmaschinengehäuse (22) eine der Verstauungsvorrichtung (20) zugewandte Seitenwand (24) aufweist, die zusammen mit einem Werkzeugabdeckungselement (26) der Verstauungsvorrichtung (20) eine Aufnahmeaussparung (28) der Verstauungsvorrichtung (20) begrenzen, in der die Werkzeugmaschinentrennvorrichtung (14) verstaubar ist, wobei die Werkzeugmaschinentrennvorrichtung (14) in einem verstauten Zustand, bezogen auf eine in einer Schneidebene betrachtete Gesamtfläche der Werkzeugmaschinentrennvorrichtung (14), mehr als 20 % von Bauteilen der Verstauungsvorrichtung (20) und/oder des Werkzeugmaschinengehäuses (22) überdeckt,
**dadurch gekennzeichnet, dass** die Kopplungsvorrichtung (12) zumindest in einem mit der Werkzeugmaschinentrennvorrichtung (14) gekoppelten Zustand relativ zum Werkzeugmaschinengehäuse (22) beweglich gelagert ist, wobei die Kopplungsvorrichtung (12) zumindest relativ zum Werkzeugmaschinengehäuse (22) schwenkbar gelagert ist, wobei die Steuer- und/oder Regeleinheit (32) dazu vorgesehen ist, die Antriebseinheit (30) in Abhängigkeit einer Winkelstellung der Kopplungsvorrichtung (12) relativ zum Werkzeugmaschinengehäuse (22) der tragbaren Werkzeugmaschine zu steuern und/oder zu regeln.

2. Tragbare Werkzeugmaschine nach Anspruch 1,
**dadurch gekennzeichnet, dass** das Werkzeugabdeckungselement (26) zumindest teilweise einstückig mit dem Werkzeugmaschinengehäuse (22) ausgebildet ist.

3. Tragbare Werkzeugmaschine nach einem der vorhergehenden Ansprüche,
**gekennzeichnet durch** zumindest eine Arretiereinheit (34), die dazu vorgesehen ist, die Kopplungsvorrichtung (12) zumindest in einem mit der Werkzeugmaschinentrennvorrichtung gekoppelten Zustand in einer Winkelstellung relativ zum Werkzeugmaschinengehäuse (22) zu fixieren.

4. Werkzeugmaschinensystem mit zumindest einer tragbaren Werkzeugmaschine nach einem der Ansprüche 1 bis 3, und mit zumindest einer Werkzeugmaschinentrennvorrichtung, die zumindest eine Führungseinheit (18) und zumindest einen Schneidstrang (16) umfasst, die zusammen ein geschlossenes System bilden.

5. Werkzeugmaschinensystem nach Anspruch 4,
**dadurch gekennzeichnet, dass** die Werkzeugmaschinentrennvorrichtung in einem mit der Kopplungsvorrichtung (12) gekoppelten Zustand mittels der Kopplungsvorrichtung (12) um eine zumindest im Wesentlichen senkrecht zu einer Schneidebene des Schneidstrangs (16) verlaufenden Schwenkachse (36) in eine Aufnahmeaussparung (28) der Verstauungsvorrichtung (20) einschwenkbar ist.

## Claims

1. Portable power tool having at least one coupling device (12), which can be coupled to a power-tool parting device (14) that has at least one cutting strand (16) and at least one guide unit (18) for guiding the cutting strand (16), having at least one drive unit (30), having at least one transmission unit (34), having at least one open-loop and/or closed-loop control unit (32), having a power-tool housing (22), which encloses the drive unit (30) and the transmission unit (34), and having at least one stowage device (20), which is provided to stow the power-tool parting device (14), at least when coupled to the coupling device (12), wherein the power-tool housing (22) has a side wall (24) that faces toward the stowage device (20) and that, together with a tool covering element (26) of the stowage device (20), delimits a receiving opening (28) of the stowage device (20) in which the power-tool parting device (14) can be stowed, wherein the power-tool parting device (14), when in a stowed state, relative to a total surface area of the power-tool parting device (14), as viewed in a cutting plane, covers more than 20% of components of the stowage device (20) and/or of the power-tool housing (22),
**characterized in that** the coupling device (12) is mounted so as to be movable relative to the power-tool housing (22), at least when coupled to the power-tool parting device (14), wherein the coupling device (12) is mounted such that it can be swiveled, at least relative to the power-tool housing (22), wherein the open-loop and/or closed-loop control unit (32) is provided to control the drive unit (30), by open-loop and/or closed-loop control, in dependence on an angular position of the coupling device (12), relative to the power-tool housing (22) of the portable power tool.

2. Portable power tool according to Claim 1,
**characterized in that** the tool covering element (26) is at least partially integral with the power-tool housing (22).

3. Portable power tool according to any one of the preceding claims,
**characterized by** at least one locking unit (34), which is provided to fix the coupling device (12), at least when coupled to the power-tool parting device, in an angular position relative to the power-tool housing (22).

4. Power-tool system having at least one portable power tool according to any one of Claims 1 to 3, and having at least one power-tool parting device, which comprises at least one guide unit (18) and at least one cutting strand (16), which together constitute a closed system.

5. Power-tool system according to Claim 4,
**characterized in that** the power-tool parting device, when coupled to the coupling device (12), can be swiveled, about a swivel axis (36) running at least substantially perpendicularly in relation to a cutting plane of the cutting strand (16), into a receiving opening (28) of the stowage device (20), by means of the coupling device (12).

## Revendications

1. Machine-outil portative avec au moins un dispositif de couplage (12), qui peut être couplé à un dispositif de séparation de machine-outil (14), qui présente au moins une chaîne de coupe (16) et au moins une unité de guidage (18) pour le guidage de la chaîne de coupe (16), avec au moins une unité d'entraînement (30), avec au moins une unité de transmission (34), avec au moins une unité de commande et/ou de régulation (32), avec un boîtier de machine-outil (22), qui entoure l'unité d'entraînement (30) et l'unité de transmission (34), et avec au moins un dispositif de rangement (20), qui est prévu pour ranger le dispositif de séparation de machine-outil (14) au moins dans un état couplé avec le dispositif de couplage (12), dans laquelle le boîtier de machine-outil (22) présente une paroi latérale (24) tournée vers le dispositif de rangement (20), qui limite, avec un élément de recouvrement d'outil (26) du dispositif de rangement (20), un creux de logement (28) du dispositif de rangement (20), dans lequel le dispositif de séparation de machine-outil (14) peut être rangé, dans laquelle le dispositif de séparation de machine-outil (14) recouvre, dans un état rangé, par rapport à une surface totale du dispositif de séparation de machine-outil (14) considérée dans un plan de coupe, plus de 20 % des composants du dispositif de rangement (20) et/ou du boîtier de machine-outil (22), **caractérisée en ce que**, au moins dans un état couplé au dispositif de séparation de machine-outil (14), le dispositif de couplage (12) est monté de façon mobile par rapport au boîtier de machine-outil (22), dans laquelle le dispositif de couplage (12) est monté de façon pivotante au moins par rapport au boîtier de machine-outil (22), dans laquelle l'unité de commande et/ou de régulation (32) est prévue pour commander et/ou réguler l'unité d'entraînement (30) en fonction d'une position angulaire du dispositif de couplage (12) par rapport au boîtier de machine-outil (22) de la machine-outil portative.

2. Machine-outil portative selon la revendication 1, **caractérisée en ce que** l'élément de recouvrement d'outil (26) est réalisé au moins en partie d'un seul tenant avec le boîtier de machine-outil (22).

3. Machine-outil portative selon l'une quelconque des revendications précédentes, **caractérisée par** au moins une unité de blocage (34), qui est prévue pour fixer le dispositif de couplage (12), au moins dans un état couplé avec le dispositif de séparation de machine-outil, dans une position angulaire par rapport au boîtier de machine-outil (22).

4. Système de machine-outil avec au moins une machine-outil portative selon l'une quelconque des revendications 1 à 3, et avec au moins un dispositif de séparation de machine-outil, qui comprend au moins une unité de guidage (18) et au moins une chaîne de coupe (16), qui forment ensemble un système fermé.

5. Système de machine-outil selon la revendication 4, **caractérisé en ce que** le dispositif de séparation de machine-outil peut pivoter, dans un état couplé au dispositif de couplage (12), au moyen du dispositif de couplage (12), autour d'un axe de pivotement (36) s'étendant au moins essentiellement perpendiculairement à un plan de coupe de la chaîne de coupe (16), dans un creux de logement (28) du dispositif de rangement (20).
